# NEW EUROPEAN PATENT SPECIFICATION

(11) **EP 2 475 700 B2**
(45) Date of publication and mention of the opposition decision: **21.12.2022**
(45) Mention of the grant of the patent: 05.11.2014
(21) Application number: 10752339.1
(22) Date of filing: 07.09.2010
(51) Int. Cl.: C08G 18/48, C08G 65/26

(54) **PROCESS FOR PREPARING A POLYURETHANE FOAM**
VERFAHREN ZUR HERSTELLUNG EINES POLYURETHANSCHAUMS
PROCÉDÉ DE PRÉPARATION D'UNE MOUSSE POLYURÉTHANE

(30) Priority: 07.09.2009 EP 09169634
(43) Date of publication of application: 18.07.2012
(73) Proprietor: Shell Internationale Research Maatschappij B.V., 2596 HR The Hague (NL)
(72) Inventor: VAN EETVELDE, Els, B-1050 Brussels (BE); ELEVELD, Michiel Barend, NL-1031 HW Amsterdam (NL); MINEUR, Waltherus Petrus Casparus, NL-3067 GJ Rotterdam (NL); SWAN, Christophe Martin, NL-1031 HW Amsterdam (NL); TAN, Tiew Imm, Singapore 239920 (SG)
(74) Representative: Shell Legal Services IP
(86) International application number: PCT/EP2010/063080
(87) International publication number: WO 2011/026989

(56) References cited:
- EP-A1- 1 589 071
- WO-A1-99/14258
- WO-A1-99/56874

## Description

The present invention relates to a process for preparing a polyurethane foam wherein a polyether polyol and a polyisocyanate are reacted in the presence of a blowing agent.

Polyether polyols are commonly used for the manufacture of polyurethane foams, such as flexible polyurethane foams. Flexible polyurethane foams are widely used in numerous applications. Main sectors of application are automotive and aircraft industry, upholstered furniture and technical articles. For instance, full foam seats, top pads for the seats and restraints for back and head, all made from flexible polyurethane foam, are widely used in cars and aeroplanes. Other applications include the use of flexible polyurethane foam as carpet backings, bedding and mattresses, foamed seat saddles for motorbikes, gaskets between a car body and its lights, lip seals of air filters for engines and insulating layers on car parts and engine parts to reduce sound and vibration.

An important characteristic for a polyurethane foam, especially for a flexible polyurethane foam, is its cell-opening. Said property of cell-opening is related to the ratio of closed cells to open cells. A flexible polyurethane foam of which all cells are open will hardly change in time. On the other hand, a foam which still contains closed cells will change in time as by forces exerted on such foam, for example in the daily use of a mattress composed of such a closed-cell foam, the number of closed cells will naturally decrease. This is highly undesired as for flexible polyurethane foam applications a constant behaviour of the foam is aimed at. Namely, lowering of the ratio of closed cells to open cells in the course of time will have an impact on other foam properties as well, such as hardness. This impact may be such that the initial values for these other properties cannot be maintained at a constant level in the course of time.

Therefore, it is desired that a polyurethane foam, especially a flexible polyurethane foam, directly after having produced it already has a maximum relative amount of open cells, that is to say has improved cell-opening, as only in such a case maintaining the foam properties at a certain, constant level in the course of time can be guaranteed.

Such improved cell-opening is also desired in cases wherein the polyether polyol is a polyether polyol prepared by ring-opening polymerization of an alkylene oxide in the presence of a composite metal cyanide complex catalyst, and wherein it is further desired to not have to completely remove said catalyst.

Surprisingly, it has been found that such improved cell-opening is achieved in a case wherein during the polyurethane foaming reaction of from 1 to 30 parts per million by weight (ppmw), based on the polyether polyol, of metals derived from a composite metal cyanide complex catalyst is present, by performing said polyurethane foaming reaction in the presence of from 0.5 to 100 ppmw, based on the polyether polyol, of a phosphoric acid compound comprising a phosphoric acid selected from orthophosphoric acid, polyphosphoric acid and polymetaphosphoric acid, and/or a partial ester of such a phosphoric acid.

Accordingly, the present invention relates to a process for preparing a polyurethane foam, wherein a polyether polyol and a polyisocyanate are reacted in the presence of:
a blowing agent;
of from 1 to 30 ppmw, based on the polyether polyol, of metals derived from a composite metal cyanide complex catalyst; and
of from 0.5 to 100 ppmw, based on the polyether polyol, of a phosphoric acid compound comprising a phosphoric acid selected from orthophosphoric acid, polyphosphoric acid and polymetaphosphoric acid, and/or a partial ester of such a phosphoric acid.

EP1589071A1 discloses a composition comprising a polyether polyol made with a composite metal cyanide complex catalyst, of from 0.5 to 100 ppm, based on the polyether polyol, of a phosphoric acid compound and of from 1 to 30 ppm, based on the polyether polyol, of metals from said catalyst. Said phosphoric acid compound comprises a phosphoric acid selected from orthophosphoric acid, polyphosphoric acid and polymetaphosphoric acid, and/or a partial ester of such a phosphoric acid.

Further, said EP1589071A1 discloses preparing an isocyanate group-terminated polyurethane prepolymer by reacting the above-mentioned polyether polyol composition with a polyisocyanate. The Examples of EP1589071A1 demonstrate that orthophosphoric acid results in a higher storage stability of the polyurethane prepolymer made in the reaction of a polyisocyanate with the polyol containing said phosphoric acid. Further, it results in a lower reactivity of the polyol containing said phosphoric acid in the reaction with a polyisocyanate when making said isocyanate group-terminated polyurethane prepolymer.

Said EP1589071A1 does not disclose preparing a polyurethane foam wherein a polyether polyol and a polyisocyanate are reacted in the presence of a blowing agent.

WO 99/56874 A1 describes a method of modifying a double metal cyanide catalyst by reacting said catalyst with an acid. This document also discloses the use of the acid-modified catalyst in an epoxide polymerisation process to form a polyether polyol.

WO 99/14258 A1 discloses a process for the polyoxyalkoxylation of an acid sensitive low molecular weight starter in the presence of a double metal cyanide catalyst. An acid, such as a phosphoric acid is added to the reaction in order to combat catalyst deactivation. The product remaining in the reactor after the reaction does not retain any acidity once the reaction is complete.

US 6156864 discloses polyurethane foams prepared by reacting a polyetherpolyol with a DMC catalyst. The polyetherpolyols are neutralized with water and phosphoric acid. The DMC catalyst is extracted from the polyetherpolyol using aqueous ammonia.

EP 1995263 A1 discloses polyurethane foams prepared by reacting a polyetherpolyol, obtained by catalyzing propylene oxide with a double metal cyanide complex catalyst, with isocyanate and a blowing agent

In the present invention, the polyether polyol may be a polyether polyol prepared by ring-opening polymerization of an alkylene oxide in the presence of a composite metal cyanide complex catalyst. Preferably, in such case, the composite metal cyanide complex catalyst is not removed after preparing the polyether polyol.

Where in the present specification reference is made to not removing the composite metal cyanide complex catalyst, this means that said catalyst is not completely removed. That is to say, all of the composite metal cyanide complex catalyst may be left in the polyether polyol. However, it is also within the scope of said embodiment of the present invention to remove part of the composite metal cyanide complex catalyst from the polyether polyol. For example, said catalyst may be removed in such an amount that the amount of the metals derived from the composite metal cyanide complex catalyst left in the polyether polyol is of from 1 to 30 ppmw based on the polyether polyol.

In the present process for preparing a polyurethane foam, the phosphoric acid compound may be added to the polyether polyol, to the polyisocyanate or to both the polyether polyol and the polyisocyanate, before the polyether polyol and the polyisocyanate are reacted. Alternatively, the phosphoric acid compound is added during the reaction of the polyether polyol and the polyisocyanate.

Preferably, the phosphoric acid compound is added to the polyether polyol before the polyether polyol and the polyisocyanate are reacted.

Thus, the present invention also relates to a process for preparing a polyurethane foam, comprising:
preparing a polyether polyol by ring-opening polymerization of an alkylene oxide in the presence of a composite metal cyanide complex catalyst, wherein the amount of the metals derived from the composite metal cyanide complex catalyst is of from 1 to 30 ppmw based on the polyether polyol;
adding a phosphoric acid compound comprising a phosphoric acid selected from orthophosphoric acid, polyphosphoric acid and polymetaphosphoric acid, and/or a partial ester of such a phosphoric acid, in an amount of from 0.5 to 100 ppmw based on the polyether polyol, without removing the composite metal cyanide complex catalyst, to obtain a polyether polyol composition; and
reacting the polyether polyol composition with a polyisocyanate in the presence of a blowing agent.

In the process of the present invention, a composite metal cyanide complex catalyst is present. Composite metal cyanide complex catalysts are frequently also referred to as double metal cyanide (DMC) catalysts.

The metals derived from the composite metal cyanide complex catalyst are present in an amount of from 1 to 30 ppmw, preferably 2 to 20 ppmw, and more preferably 3 to 15 ppmw, based on the polyether polyol. The amount of the composite metal cyanide complex catalyst may be of from 5 to 100 ppmw, preferably 10 to 40 ppmw, based on the polyether polyol.

The polyether polyol may be prepared by using a composite metal cyanide complex catalyst in such an amount that the amount of the metals derived from the composite metal cyanide complex catalyst is of from 1 to 30 ppmw based on the polyether polyol. Where in the present specification reference is made to the weight of the polyether polyol, this concerns the weight of the final polyether polyol.

A composite metal cyanide complex catalyst is typically represented by the following formula (1):

(1) M¹ₐ[M²_{b}(CN)_{c}]_{d}.e(M¹_{f}Xg).h(H₂O).i(R)

wherein each of M¹ and M² is a metal, X is a halogen atom, R is an organic ligand, and each of a, b, c, d, e, f, g, h and i is a number which is variable depending upon the atomic balances of the metals, the number of organic ligands to be coordinated, etc.

In the above formula (1), M¹ is preferably a metal selected from Zn(II), Fe(II), Fe(III), Co(II), Ni(II), Mo(IV), Mo(VI), Al(III), V(V), Sr(II), W(IV), W(VI), Mn(II), Cr(III), Cu(II), Sn(II) and Pb(II), particularly preferably Zn(II) or Fe(II). In the above formula, M² is preferably a metal selected from Fe(II), Fe(III), Co(II), Co(III), Cr(II), Cr(III), Mn(II), Mn(III), Ni(II), V(IV) and V(V), particularly preferably Co(III) or Fe(III). II, III, IV and V between the above brackets represent the atomic valences.

In the above formula (1), R is an organic ligand and is preferably at least one compound selected from the group consisting of an alcohol, an ether, a ketone, an ester, an amine and an amide. As such an organic ligand, a water-soluble one may be used. Specifically, one or more compounds selected from tert-butyl alcohol, n-butyl alcohol, iso-butyl alcohol, tert-pentyl alcohol, isopentyl alcohol, N,N-dimethyl acetamide, glyme (ethylene glycol dimethyl ether), diglyme (diethylene glycol dimethyl ether), triglyme (triethylene glycol dimethyl ether), ethylene glycol mono-tert-butylether, iso-propyl alcohol and dioxane, may be used as organic ligand(s). The dioxane may be 1,4-dioxane or 1,3-dioxane and is preferably 1,4-dioxane. Most preferably, the organic ligand or one of the organic ligands in the composite metal cyanide complex catalyst is tert-butyl alcohol. Further, as an alcohol organic ligand, a polyol, preferably a polyether polyol may be used. More preferably, a poly(propylene glycol) having a number average molecular weight in the range of from 500 to 2,500 Dalton, preferably 800 to 2,200 Dalton, may be used as the organic ligand or one of the organic ligands. Most preferably, such poly(propylene glycol) is used in combination with tert-butyl alcohol as organic ligands.

The composite metal cyanide complex catalyst can be produced by known production methods. For example, it can be produced by a method wherein an organic ligand is coordinated to a reaction product obtained by reacting a metal halide with an alkali metal cyano metalate in an aqueous solution, then the solid component is separated, and the separated solid component is washed with an aqueous solution containing organic ligand. An alternative method is one wherein a metal halide is reacted with an alkali metal cyano metalate in an aqueous solution containing organic ligand, and the obtained reaction product (solid component) is separated, and the separated solid component is washed with an aqueous solution containing organic ligand.

As the metal for the metal halide, one exemplified above as M¹ may be used, and Zn(II) or Fe(II) is particularly preferred. The most preferred metal halide is ZnCl₂. As the metal constituting the cyano metalate, one exemplified above as M₂ may be used, and Co(III) or Fe(III) is particularly preferred. A preferred specific example of the alkali metal cyano metalate is Na₃[Co(CN)₆] or K₃[Co(CN)₆]. Further, instead of an alkali metal cyano metalate, H₃[Co(CN)₆] may also be used.

Further, the reaction product obtained by the above method may be washed and then subjected to filtration, and the cake (solid component) thereby obtained may be dried to prepare a composite metal cyanide complex catalyst in a powder form. Alternatively, the aqueous solution containing organic ligand and the composite metal cyanide complex catalyst after washing the reaction product, may be dispersed in a polyol, and then, an excess amount of water and the organic ligand may be distilled off to prepare a composite metal cyanide complex catalyst in a slurry form.

As such disperging polyol, a polyether polyol may be used. The polyether polyol is preferably a polyether polyol having of from 2 to 12 hydroxyl groups and a number average molecular weight of from 300 to 5,000 Dalton which is obtainable by ring-opening polymerization of an alkylene oxide with a polyhydric alcohol such as ethylene glycol, propylene glycol, diethylene glycol, dipropylene glycol, trimethylol propane or glycerol in the presence of an alkali catalyst or a cationic catalyst. Such a polyether polyol may also be used as an initiator at the time of subsequently producing a polyether polyol using the composite metal cyanide complex catalyst in slurry form.

The number of hydroxyl groups in such disperging polyol is preferably of from 2 to 8, particularly preferably 2 to 3. The alkylene oxide to be used in making said polyol may be propylene oxide, 1,2-butylene oxide, 2,3-butylene oxide, epichlorohydrin, oxetane or tetrahydrofuran. They may be used in combination as a mixture of two or more of them. Propylene oxide is preferred. Most preferably, said disperging polyol is a poly(propylene glycol) having a number average molecular weight of from 500 to 1,500 Dalton.

In the process of the present invention, a phosphoric acid compound is present. Said phosphoric acid compound comprises a phosphoric acid selected from orthophosphoric acid, polyphosphoric acid and polymetaphosphoric acid, and/or a partial ester of such a phosphoric acid.

The phosphoric acid compound is present in an amount of from 0.5 to 100 ppmw based on the polyether polyol. Preferably, the amount of the phosphoric acid compound is at least 1 ppmw, more preferably at least 2 ppmw, more preferably at least 3 ppmw, more preferably at least 4 ppmw, and most preferably at least 5 ppmw. Further, preferably, the amount of the phosphoric acid compound is at most 50 ppmw, more preferably at most 40 ppmw, more preferably at most 30 ppmw, and most preferably at most 25 ppmw.

Orthophosphoric acid (H₃PO₄) is a compound represented by [O=P(OH)₃].

Polyphosphoric acid is represented by the following formula (2): 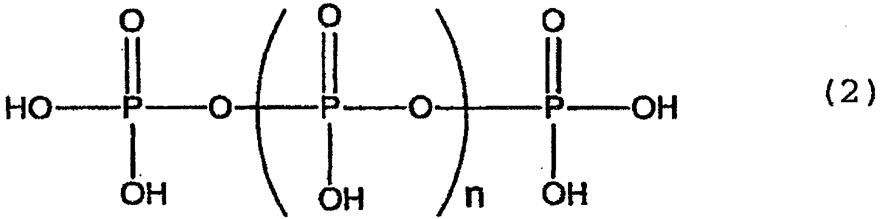 n in the above formula (2) is an integer and may be of from 0 to 10, preferably 0 to 5. Most preferred is pyrophosphoric acid (H₄P₂O₇) wherein n is 0, triphosphoric acid (H₅P₃O₁₀) wherein n is 1, or tetraphosphoric acid (H₆P₄O₁₃) wherein n is 2.

Polymetaphosphoric acid is represented by the following formula (3): 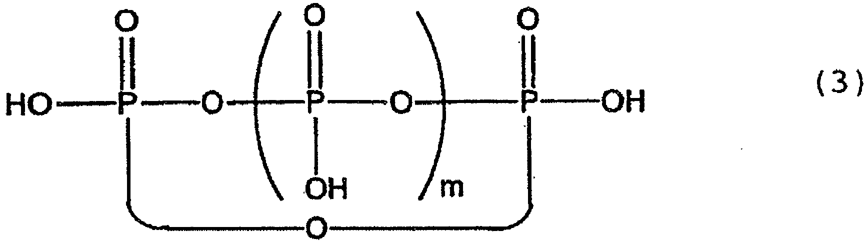 m in the above formula (3) is an integer and may be of from 1 to 10, preferably 1 to 5. Most preferred is trimetaphosphoric acid (H₃P₃O₉) wherein m is 1, or tetrametaphosphoric acid (H₄P₄O₁₂) wherein m is 2.

Further, in the present invention, a partial ester of such a phosphoric acid may also be used. The partial ester of a phosphoric acid means one wherein not all OH groups in the phosphoric acid are esterified and some OH groups remain. Namely, for example, a partial ester of orthophosphoric acid means a monoester of orthophosphoric acid or a diester of orthophosphoric acid.

The ester is preferably an ester having a C₁₋₁₈ hydrocarbon group, more preferably one having a C₁₋₁₈ alkyl group, a C₁₋₁₈ cycloalkyl group or a C₁₋₁₈ aryl group.

The above alkyl group may for example be a methyl group, an ethyl group, a propyl group, a butyl group, a hexyl group, an octyl group, a 2-ethylhexyl group, a decyl group, a dodecyl group or a stearyl group. Further, it may be an alkyl group having an aromatic group as a substituent, such as a benzyl group. The above aryl group is preferably a C₁₋₁₀ aryl group, for example a phenyl group. Further, it may be a group having an alkyl group as a substituent, such as a toluyl group or a xylyl group. The above cycloalkyl group may for example be a cyclopentyl group or a cyclohexyl group.

Preferably, the phosphoric acid compound is at least one compound selected from the group consisting of orthophosphoric acid, a monoalkyl ester of orthophosphoric acid and a dialkyl ester of orthophosphoric acid. More preferably, said compound is orthophosphoric acid.

The phosphoric acid compound may be added as it is or as diluted with water or another solvent, and it is particularly preferred to add it in the form of an aqueous solution. In a case where water or another solvent is used, such water or solvent may be removed from the polyol by drying under reduced pressure.

In the process of the present invention, a polyether polyol is reacted with a polyisocyanate. Polyether polyols are also frequently referred to as polyoxyalkylene polyols. Polyether polyols are typically obtained by reacting a starting compound or initiator having a plurality of active hydrogen atoms with one or more alkylene oxides, such as ethylene oxide, propylene oxide, butylene oxide or mixtures of two or more of these. A particularly preferred alkylene oxide is propylene oxide or a combination of propylene oxide and ethylene oxide.

As the initiator, a polyhydric alcohol such as ethylene glycol, propylene glycol, diethylene glycol, dipropylene glycol, trimethylol propane or glycerol, or a polyether monool or polyether polyol having of from 2 to 12 hydroxyl groups and a number average molecular weight of from 300 to 5,000 Dalton, which is obtainable by ring-opening polymerization of an alkylene oxide with the above-mentioned polyhydric alcohol in the presence of an alkali catalyst or a cationic catalyst, may be used. The number of hydroxyl groups in the above-mentioned polyhydric alcohol is preferably of from 2 to 8, particularly preferably from 2 to 3. Most preferably, propylene glycol (MPG), glycerol or a combination of both is used as initiator.

The initiator may be introduced continuously to the reactor together with the alkylene oxide and/or the catalyst, to carry out the polymerization of the alkylene oxide. As the initiator in such a case, a polyhydric alcohol having a low molecular weight may be used. As such a polyhydric alcohol having a low molecular weight, a polyhydric alcohol having a molecular weight of at most 400, such as ethylene glycol, propylene glycol, diethylene glycol, dipropylene glycol, trimethylol propane or glycerol, may be used. Most preferably, also in such case, propylene glycol (MPG), ethylene glycol (MEG), diethylene glycol (DEG), glycerol or a combination thereof is used as initiator.

Suitable polyether polyols in the present polyurethane foam preparation process are those having a number average molecular weight in the range of from 350 to 15,000 Dalton and a nominal functionality (Fn) of at least 2.0.

It has been found particularly advantageous to use polyether polyols having a nominal functionality (Fn) of from 2 to 4, preferably of from 2 to 3, and a number average molecular weight of from 500 to 6,500 Dalton, preferably of from 1,500 to 6,000 Dalton, more preferably of from 2,500 to 5,500 Dalton. The hydroxyl value of the polyether polyol suitably is of from 15 to 150 mg KOH/g, more suitably of from 20 to 75 mg KOH/g.

Preferably, the polyurethane foam to be prepared in the present process is a flexible polyurethane foam. Polyether polyols, which are suitable for preparing flexible polyurethane foams therefrom (also referred to as flexible polyether polyols), have a relatively high number average molecular weight (for example 3,000 to 6,500 Dalton) and a relatively low nominal functionality (Fn; for example 2 to 3 hydroxyl groups per molecule). Reference is made to "Chemistry and Technology of Polyols for Polyurethanes", Rapra Technology Ltd., 2005, especially page 8.

It has been found particularly advantageous to use a polyether polyol having a relatively high number average molecular weight and a relatively low nominal functionality, which polyol additionally contains the composite metal cyanide complex catalyst and the phosphoric acid compound before it is combined with the polyisocyanate and the blowing agent in the polyurethane foaming reaction.

In the process of the present invention, the polyether polyol is reacted with a polyisocyanate in the presence of a blowing agent.

The polyisocyanate may for example be an aromatic polyisocyanate such as tolylene diisocyanate (TDI), diphenylmethane diisocyanate or polymethylene polyphenyl isocyanate, an aliphatic polyisocyanate such as hexamethylene diisocyanate, xylylene diisocyanate, dicyclohexylmethane diisocyanate, lysine diisocyanate or tetramethylxylylene diisocyanate, an alicyclic polyisocyanate such as isophorone diisocyanate, or a modified product thereof. Preferably, the polyisocyanate is a mixture of 80 wt.% of 2,4-tolylene diisocyanate and 20 wt.% of 2,6-tolylene diisocyanate, which mixture is sold as 'TDI-80'.

In the polyurethane preparation process of the present invention, the molar ratio of isocyanate (NCO) groups in the polyisocyanate to hydroxyl (OH) groups in the polyether polyol may be such that the final polyurethane foam contains no free terminal NCO groups. Said molar ratio of NCO/OH is preferably of from 0.9/1 to 1.5/1. A molar ratio of NCO/OH of 1/1 corresponds with an isocyanate index of 100. In case water is used as a blowing agent said isocyanate index is preferably greater than 100 so that isocyanate groups can react with water, as further discussed below.

The type of blowing agent, needed to prepare the polyurethane foam of the present invention, is not essential. For example, suitable blowing agents include water, acetone, gaseous or liquid carbon dioxide, halogenated hydrocarbons, aliphatic alkanes and alicyclic alkanes. Due to the ozone depleting effect of the fully chlorinated, fluorinated alkanes (CFC's) the use of this type of blowing agents is generally not preferred, although it is possible to use them within the scope of the present invention. The halogenated alkanes, wherein at least one hydrogen atom has not been substituted by a halogen atom (the so-called HCFC's) have no or hardly any ozone depleting effect and therefore are the preferred halogenated hydrocarbons to be used in physically blown foams. A very suitable HCFC type blowing agent is 1-chloro-1,1-difluoroethane. The use of water as a (chemical) blowing agent is also well known. Water reacts with isocyanate groups according to the well known NCO/H₂O reaction, thereby releasing carbon dioxide which causes the blowing to occur. The aliphatic and alicyclic alkanes, finally, were developed as alternative blowing agents for the CFC's. Examples of such alkanes are n-pentane and n-hexane (aliphatic) and cyclopentane and cyclohexane (alicyclic). It will be understood that the above blowing agents may be used singly or in mixtures of two or more. The amounts wherein the blowing agents are to be used are those conventionally applied, i.e. between 0.1 and 10 php, preferably 0.1 and 5 php, in case of water and between about 0.1 and 20 php in case of halogenated hydrocarbons, aliphatic alkanes and alicyclic alkanes.

Additionally, other components may also be present during the polyurethane preparation process of the present invention, such as one or more polyurethane catalysts, surfactants and/or cross-linking agents.

Polyurethane catalysts are known in the art and include many different compounds. For the purpose of the present invention, suitable catalysts include tin-, lead- or titanium-based catalysts, preferably tin-based catalysts, such as tin salts and dialkyl tin salts of carboxylic acids. Specific examples are stannous octoate, stannous oleate, dibutyltin dilaureate, dibutyltin acetate and dibutyltin diacetate. Other suitable catalysts are tertiary amines, such as, for instance, bis(2,2'-dimethylamino)ethyl ether, trimethylamine, triethylamine, triethylenediamine and dimethylethanolamine (DMEA). Examples of commercially available tertiary amine catalysts are those sold under the tradenames NIAX, TEGOAMIN and DABCO (all trademarks). The catalyst is typically used in an amount of from 0.01 to 2.0 parts by weight per hundred parts by weight of polyether polyol (php). Preferred amounts of catalyst are from 0.05 to 1.0 php.

The use of foam stabilisers (surfactants) is well known. Organosilicone surfactants are most conventionally applied as foam stabilisers in polyurethane production. A large variety of such organosilicone surfactants is commercially available. Usually, such foam stabiliser is used in an amount of up to 5% by weight based on the reaction mixture of polyol reactant and polyisocyanate reactant.

The use of cross-linking agents in the production of polyurethane foams is also well known. Polyfunctional glycol amines are known to be useful for this purpose. The polyfunctional glycol amine which is most frequently used and is also useful in the preparation of the present flexible polyurethane foams, is diethanol amine, often abbreviated as DEOA. If used at all, the cross-linking agent is applied in amounts up to 3.0 php, but amounts in the range of from 0.2 to 1.5 php are most suitably applied.

In addition, other well known auxiliaries, such as flame retardants and fillers may also be used during the polyurethane preparation process of the present invention.

The invention is further illustrated by the following Examples.

### Examples

### (1) Preparing polyether polyol composition

A polyether polyol (designated herein as polyether polyol X) was prepared using a double metal cyanide (DMC) catalyst. Said DMC catalyst was a zinc(II)-hexacyanocobaltate(III)/ tert-butylalcohol/ polypropyleneglycol complex in powder form, containing Zn(II)₃[Co(III) (CN)₆]₂ and Zn(II)Cl₂ in a molar ratio of about 1:1. Further, the catalyst contained a small amount of water. The organic ligand in the catalyst comprised tert-butylalcohol and polypropyleneglycol having a number average molecular weight of about 1,000 Dalton.

The DMC catalyst is prepared by combining an aqueous solution of a K₃[Co(CN)₆] salt and an aqueous solution of a ZnCl₂ salt, in the presence of organic ligand. Said ZnCl₂ salt is used in molar excess over the K₃[Co(CN)₆] salt. The solid catalyst product so obtained is then worked up via filtration, washing, drying and milling into a powder.

A random mixture of ethylene oxide (EO) and propylene oxide (PO) in a weight ratio EO:PO of 1:9 was then contacted with glycerol in the presence of a 0.4 wt.% dispersion of the above-mentioned powdery DMC catalyst in monopropylene glycol. The weight ratio of glycerol:MPG was 2.1:0.6. The reaction was carried out at 130 °C and a pressure of 4 bara.

Upon completion of the polyether polyol making reaction, light components were removed by a stripping process using nitrogen. The final polyether polyol was not filtered, nor was any DMC catalyst removed therefrom by any other method. Said final polyether polyol X additionally contained about 25 ppmw of the DMC catalyst, based on the weight of the polyether polyol, which corresponded to 2-3 ppmw of cobalt and 5-7 ppmw of zinc derived from said catalyst, based on the weight of the polyether polyol.

To said final polyether polyol X, either no orthophosphoric acid (H₃PO₄) was added or such an amount of an aqueous solution containing 75 wt.% of said acid was added resulting in an amount of 10, 15 or 20 ppmw of H₃PO₄, based on the weight of the polyether polyol. The water originating from said aqueous solution was not subsequently removed from the polyol.

The polyether polyol X is a polyether polyol containing propylene oxide and ethylene oxide units in a weight ratio EO:PO of 1:9, and having a content of primary hydroxyl groups of 10%. Further, said polyether polyol X has a hydroxyl number of 48 mg KOH/g, a number average molecular weight of 3,500 Dalton, and a nominal functionality (Fn) of 2.7.

The polyether polyol composition comprising polyether polyol X, DMC catalyst and phosphoric acid as prepared above was used in part (2) below in making polyurethane foam.

### (2) Preparing polyurethane foam

In these polyurethane foaming experiments, the following foaming formulation was used:

| | | |
|---|---|---|
| 100 | pbw | polyether polyol composition comprising polyether polyol X, DMC catalyst and phosphoric acid as prepared under part (1) above |
| 57.63 | php | TDI-80 (polyisocyanate) |
| 4.8 | php | water (blowing agent) |
| 0.28 | php | stannous(II)octoate catalyst |
| 0.15 | php | mixture of Tegoamin BDE catalyst (ex Evonik Goldschmidt) and Dabco 33-LV catalyst (ex Air Products and Chemicals) in a weight ratio of 1:3; Tegoamin BDE catalyst is an amine mixture containing 70% of ethanamine, 2,2'-oxybis[N,N-dimethyl; Dabco 33-LV catalyst is a mixture of 33 wt.% of 1,4-diazabicyclooctane and 67 wt.% of oxydipropanol |
| 1.2 | php | silicone surfactant (Silicone B4900) |

wherein php stands for parts per hundred parts polyether polyol X.

A free-rise polyurethane foam was prepared by charging all the components of the above-mentioned foaming formulation, except polyisocyanate, into a container and intensely mixing. The polyisocyanate was then added with stirring and the contents were subsequently poured into an open mold. The polyurethane foam was allowed to rise and cure at room temperature.

For all of the foams so produced the porosity was measured by the following method. This porosity method involves a quantitative evaluation of the permeability of flexible polyurethane foams in terms of their resistance to the passage of a constant flow of air. This property of "air permeability" is also referred to as "air breathability" or "porosity". A constant rate of flow of air (8 litres/min) is passed through a 100*100*50 mm foam specimen clamped in a suitably designed apparatus. Resistance to this flow creates a back-pressure. This pressure drop over the foam specimen is measured in mm ethanol (EtOH) by means of a manometer containing EtOH.

Said property of porosity as measured in the above way is related to the ratio of closed cells to open cells in the foam. That is to say, the higher the resistance of the foam to the flow of air (i.e. higher "porosity" as measured in the above way), the higher the ratio of closed cells to open cells in the foam.

The porosity values measured are mentioned in the below table. From this it can be concluded that the presence in Examples 1, 2 and 3, of phosphoric acid had a marked influence on the ratio of closed cells to open cells in the foam. That is to say, by adding the phosphoric acid the number of closed cells is decreased and consequently the number of open cells is increased. This is advantageous for the reasons mentioned in the introduction of the present specification.

| | ppmw H₃PO₄ in polyether polyol X | Porosity (mm EtOH) |
|---|---|---|
| Comparative Example | 0 | 60 |
| Example 1 | 10 | 28 |
| Example 2 | 15 | 12 |
| Example 3 | 20 | 18 |

## Claims

1. Process for preparing a polyurethane foam, wherein a polyether polyol and a polyisocyanate are reacted in the presence of:
a blowing agent;
of from 1 to 30 ppmw, based on the polyether polyol, of metals derived from a composite metal cyanide complex catalyst; and
of from 0.5 to 100 ppmw, based on the polyether polyol, of a phosphoric acid compound comprising a phosphoric acid selected from orthophosphoric acid, polyphosphoric acid and polymetaphosphoric acid, and/or a partial ester of such a phosphoric acid.

2. Process according to claim 1, wherein the polyether polyol is a polyether polyol prepared by ring-opening polymerization of an alkylene oxide in the presence of a composite metal cyanide complex catalyst.

3. Process according to claim 2, wherein after preparing the polyether polyol, the composite metal cyanide complex catalyst is not removed.

4. Process according to any one of the preceding claims, wherein before the polyether polyol and the polyisocyanate are reacted, the phosphoric acid compound is added to the polyether polyol, to the polyisocyanate or to both the polyether polyol and the polyisocyanate, or wherein the phosphoric acid compound is added during the reaction of the polyether polyol and the polyisocyanate.

5. Process according to any one of the preceding claims, wherein the composite metal cyanide complex catalyst contains tert-butyl alcohol as organic ligand.

6. Process according to any one of the preceding claims, wherein the phosphoric acid compound is at least one compound selected from the group consisting of orthophosphoric acid, a monoalkyl ester of orthophosphoric acid and a dialkyl ester of orthophosphoric acid.

7. Process according to any one of the preceding claims, wherein the polyether polyol has a nominal functionality (Fn) of from 2 to 4, preferably of from 2 to 3, and a number average molecular weight of from 500 to 6,500 Dalton, preferably of from 1,500 to 6,000 Dalton, more preferably of from 2,500 to 5,500 Dalton.

## Patentansprüche

1. Verfahren zum Herstellen eines Polyurethanschaums, wobei ein Polyetherpolyol und ein Polyisocyanat umgesetzt werden in der Gegenwart von:
einem Treibmittel;
von 1 bis 30 ppmw, basierend auf dem Polyetherpolyol, von aus einem Komposit-Metallcyanidkomplexkatalysator abgeleiteten Metallen; und
von 0,5 bis 100 ppmw, basierend auf dem Polyetherpolyol, einer Phosphorsäureverbindung, umfassend eine Phosphorsäure, ausgewählt aus ortho-Phosphorsäure, Polyphosphorsäure und Polymetaphosphorsäure, und/oder einem partiellen Ester von solch einer Phosphorsäure.

2. Verfahren nach Anspruch 1, wobei das Polyetherpolyol ein Polyetherpolyol ist, hergestellt durch Ringöffnungspolymerisation eines Alkylenoxids in der Gegenwart eines Komposit-Metallcyanidkomplexkatalysators.

3. Verfahren nach Anspruch 2, wobei nach dem Herstellen des Polyetherpolyols der Komposit-Metallcyanidkomplexkatalysator nicht entfernt wird.

4. Verfahren nach einem beliebigen der vorhergehenden Ansprüche, wobei bevor das Polyetherpolyol und das Polyisocyanat umgesetzt werden, die Phosphorsäureverbindung zu dem Polyetherpolyol, zu dem Polyisocyanat oder zu sowohl dem Polyetherpolyol als auch dem Polyisocyanat, hinzugefügt wird, oder wobei die Phosphorsäureverbindung während der Reaktion des Polyetherpolyols und des Polyisocyanats hinzugefügt wird.

5. Verfahren nach einem beliebigen der vorhergehenden Ansprüche, wobei der Komposit-Metallcyanidkomplexkatalysators tert-Butylalkohol als organischen Liganden enthält.

6. Verfahren nach einem beliebigen der vorhergehenden Ansprüche, wobei die Phosphorsäureverbindung mindestens eine Verbindung ist, ausgewählt aus der Gruppe, bestehend aus ortho-Phosphorsäure, einem Monoalkylester von ortho-Phosphorsäure und einem Dialkylester von ortho-Phosphorsäure.

7. Verfahren nach einem beliebigen der vorhergehenden Ansprüche, wobei das Polyetherpolyol eine nominale Funktionalität (Fn) von 2 bis 4, vorzugsweise von 2 bis 3, aufweist, und ein zahlengemitteltes Molekulargewicht von 500 bis 6500 Dalton, vorzugsweise von 1500 bis 6000 Dalton, stärker bevorzugt von 2500 bis 5500 Dalton.

## Revendications

1. Méthode pour préparer une mousse polyuréthane, dans laquelle un polyéther polyol et un polyisocyanate sont mis à réagir en présence de :
un agent d'expansion ;
de 1 à 30 ppm en poids, basé sur le polyéther polyol, de métaux dérivés d'un catalyseur composite de complexe de cyanure de métal ; et
de 0.5 à 100 ppm en poids, basé sur le polyéther polyol, d'un composé d'acide phosphorique comprenant un acide phosphorique choisi parmi l'acide orthophosphorique, l'acide polyphosphorique, et l'acide polymétaphosphorique, et/ou un ester partiel d'un tel acide phosphorique.

2. Méthode selon la revendication 1, dans laquelle le polyéther polyol est un polyéther polyol préparé par polymérisation par ouverture de cycle d'un oxyde d'alkylène en présence d'un catalyseur composite de complexe de cyanure de métal.

3. Méthode selon la revendication 2, dans laquelle le catalyseur composite de complexe de cyanure de métal n'est pas retiré après la préparation du polyéther polyol.

4. Méthode selon l'une quelconque des revendications précédentes, dans laquelle avant que le polyéther polyol et le polyisocyanate sont mis à réagir, le composé d'acide phosphorique est ajouté au polyéther polyol, au polyisocyanate, ou à la fois au polyéther polyol et au polyisocyanate, ou dans laquelle le composé d'acide phosphorique est ajouté durant la réaction entre le polyéther polyol et le polyisocyanate.

5. Méthode selon l'une quelconque des revendications précédentes dans laquelle le catalyseur composite de complexe de cyanide de métal contient du tert-butanol comme ligand organique.

6. Procédé selon l'une quelconque des revendications précédentes, dans lequel le composé d'acide phosphorique est au moins un composé choisi parmi le groupe constitué de l'acide orthophosphorique, un ester monoalkyle de l'acide phosphorique et un ester dialkyle de l'acide orthophosphorique.

7. Méthode selon l'une quelconque des revendications précédentes, dans laquelle le polyéther polyol a une fonctionnalité nominale (Fn) de 2 à 4, de préférence de 2 à 3, et un poids moléculaire moyen en nombre de 500 à 6500 Dalton, de préférence de 2500 à 5500 Dalton.
